# EUROPEAN PATENT APPLICATION

(11) **EP 1 108 575 A1**
(43) Date of publication of application: **20.06.2001**
(21) Application number: 99967825.3
(22) Date of filing: 12.03.1999
(51) Int. Cl.: B60H 1/22, F25B 47/02

(54) **AIR CONDITIONER FOR VEHICLE**

(30) Priority: 20.08.1998 JP 23462598
(71) Applicant: Zexel Valeo Climate Control Corporation, Saitama 360-0193 (JP)
(72) Inventor: SAKURADA, Muneo, Zexel Corp., Konan Factory, Osato-gun, Saitama 360-0193 (JP); NISHISHITA, Kunihiko, Zexel Corp., Konan Factory, Konan-machi, Osato-gun, Saitama 360-0193 (JP); HARAGUCHI, Tatsuo, Zexel Corp., Konan Factory, Konan-machi, Osato-gun, Saitama 360-0193 (JP)
(74) Representative: Kosmin, Gerald Emmanuel
(86) International application number: JP9901199
(87) International publication number: WO0010824

(57) **Abstract**

Frost formation at an outdoor heat exchanger of a heat-pump type air-conditioning system is prevented and an improvement in the heating performance is achieved by efficiently utilizing the heat of the engine cooling liquid. An outdoor heat exchanger 5 and a radiator 9 are each provided with a heat exchanging unit constituted of corrugated fins and a plurality of tubes laminated alternately with the fins and a header communicating with the plurality of tubes, the heat exchanging units of the outdoor heat exchanger 5 and the radiator 9 face opposite each other and the fins are formed as an integrated member shared by the two heat exchanging units. The air-conditioning system for vehicles structured as described above is provided with a means for decision-making that makes a decision as to whether or not the outdoor heat exchanger 5 is in an environment in which frost formation may occur and a means for control that distributes the engine cooling water to the radiator 9 if it is decided by the means for decision-making that the outdoor heat exchanger 5 is in an environment in which frost formation may occur.

## Description

### TECHNICAL FIELD

The present invention relates to a system having a heat-pump type freezing cycle in which a coolant circulates and a cooling liquid circulating cycle in which an engine cooling liquid circulates with an outdoor heat exchanger in the heat-pump type freezing cycle and a radiator in the cooling liquid circulating cycle provided parallel with each other, which prevents frost formation from occurring at the outdoor heat exchanger.

### BACKGROUND ART

A vehicle is normally provided with a cooling liquid circulating cycle for circulating an engine cooling liquid, having a structure in which the cooling liquid is made to circulate without being distributed to the heat exchanging unit of the radiator until the cooling liquid reaches a level equal to or higher than a specific temperature since the cooling liquid needs to be warmed up to the specific temperature (normally approximately 80°C) as soon as possible, particularly at engine startup.

In addition, air-conditioning systems for cooling/heating the vehicle cabin include heat-pump type air-conditioning systems. In the heat-pump type freezing cycle employed in such an air-conditioning system, the direction in which the coolant is distributed is switched so that the outdoor heat exchanger is utilized as an evaporator and the indoor heat exchanger is utilized as a condenser during a heating operation and so that the outdoor heat exchanger is utilized as a condenser and the indoor heat exchanger is used as an evaporator during a cooling operation.

A problem occurs in the heat-pump type air-conditioning system during a heating operation performed especially at engine startup in that frost is formed from the condensed water collected around the heat exchanging unit of the outdoor heat exchanger provided to perform heat exchange for the coolant and the external air if the external air temperature is low or the temperature of the coolant is lowered to approximately 0°C, which, in turn, causes the heat exchanging unit to become clogged to result in an air blockage, hindering heat exchange between the coolant and the external air and ultimately preventing the outdoor heat exchanger from functioning as an evaporator. In addition, there is another problem in that the coolant cannot absorb heat from the external air to a sufficient degree and, as a result, the system fails to achieve its full heating function when the temperature at the heat exchanging unit is fairly low if not low enough to form frost.

Accordingly, an object of the present invention is to provide an air-conditioning system for vehicles that is capable of preventing frost formation from occurring at an outdoor heat exchanger of a heat-pump type air-conditioning system, clearing a frosted state quickly even if frost formation occurs and improving its heating function by utilizing the heat of the engine cooling liquid in an effective manner.

### DISCLOSURE OF THE INVENTION

In order to achieve the object described above, in the air-conditioning system for vehicles according to the present invention having a heat-pump type freezing cycle constituted of a compressor, an indoor heat exchanger, an expansion device and an outdoor heat exchanger and a cooling liquid circulating cycle that circulates a cooling liquid for cooling the engine and distributes the cooling liquid to a radiator when the cooling liquid reaches a level equal to or higher than a specific temperature, with the outdoor heat exchanger and the radiator each provided with a heat exchanging unit constituted of fins and a plurality of tubes that are alternately laminated with fins and headers communicating with the plurality of tubes, the heat exchanging units facing opposite each other and the fins formed as a common integrated member, a means for decision-making that makes a decision as to whether or not the outdoor heat exchanger is in an environment in which frost formation may occur and a means for control that distributes the cooling liquid to the radiator if the means for decision-making decides that the outdoor heat exchanger is in an environment in which frost formation may occur are provided.

By adopting the structure described above, when utilizing the heating function of the air-conditioning system particularly at engine startup, the engine cooling liquid, the temperature of which may be lower than a specific temperature and which, therefore, may not need to be cooled, is distributed to the heat exchanging unit of the radiator if the outdoor heat exchanger is in an environment in which frost formation may occur to inhibit the heating function so that the heat of the cooling liquid is communicated to the outdoor heat exchanger via the integrated fins formed as a common member between the radiator and the outdoor heat exchanger, thereby preventing frost formation or removing frost formed at the outdoor heat exchanger and achieving an improvement in the heating function.

In addition, with the cooling liquid circulating cycle provided with an open / close valve that opens the distribution path to the radiator when the cooling liquid achieves a temperature equal to or higher than the specific temperature, the means for control may open the open / close valve if the means for decision-making decides that the outdoor heat exchanger is in an environment in which frost formation may occur even when the temperature of the cooling liquid is lower than the specific temperature.

In the structure described above, if the outdoor heat exchanger is in an environment in which frost formation may occur, the open / close valve is set in an open state to distribute the cooling liquid to the radiator even when the temperature of the cooling liquid is equal to or lower than the specific temperature and the open / close valve is in a closed state so that the heat of the cooling liquid is communicated to the outdoor heat exchanger via the integrated fins.

Also, with the cooling liquid circulating cycle provided with an open / close valve that opens a distribution path to the radiator when the temperature of the cooling liquid reaches a level equal to or higher than the specific temperature, the means for control may distribute the cooling liquid to the radiator by bypassing the open / close valve if it is decided by the means for decision-making that the outdoor heat exchanger is in an environment in which frost formation may occur.

In the structure described above, if the outdoor heat exchanger is in an environment in which frost formation may occur, the cooling liquid is distributed to the radiator by bypassing the open / close valve even when the temperature of the cooling liquid is equal to or lower than the specific temperature and the open / close valve is in a closed state so that the heat of the cooling liquid is communicated to the outdoor heat exchanger via the integrated fins.

Alternatively, with the cooling liquid circulating cycle provided with an open / close valve that opens a distribution path to the radiator when the temperature of the cooling liquid reaches a level equal to or higher than a specific temperature and another open / close valve positioned parallel to the open / close valve, the means for control may open the other open / close valve if it is decided by the means for decision-making that the outdoor heat exchanger is in an environment in which frost formation may occur.

In the structure described above, if the outdoor heat exchanger is in an environment in which frost formation may occur, the cooling liquid is distributed to the radiator by opening of the other open / close valve provided parallel to the open / close valve in a closed state and bypassing the open / close valve even when the temperature of the cooling liquid is equal to or lower than the specific temperature and the open / close valve is in a closed state.

In addition, the means for decision-making may be provided with sensors for detecting the surface temperature of the outdoor heat exchanger and the external air temperature or a sensor for detecting the coolant pressure at the intake or the outlet of the outdoor heat exchanger so that a decision can be made as to whether or not the outdoor heat exchanger is in an environment in which frost formation may occur based upon whether or not the detected temperatures are equal to or lower than a specific temperature or whether or not the detected pressure is equal to or lower than a specific pressure.

By adopting the structure described above in which a decision is made as to whether not the outdoor heat exchanger is in an environment in which frost formation may occur by checking factors that may cause frost formation at the outdoor heat exchanger, such as the surface temperature of the heat exchanging unit, i.e., the sensed temperature of the fins at the heat exchanging unit of the outdoor heat exchanger, the sensed temperature of the air between the fins and the external air temperature, or changes occurring in the pressure of the coolant due to frost formation, an accurate decision is made with regard to the frost formation state.

Furthermore, the heat-pump type freezing cycle may be provided with another outdoor heat exchanger having fins constituted as a separate member from the fins of the outdoor heat exchanger and positioned parallel to the outdoor heat exchanger and a means for flow path switching that selects a coolant flow path to the outdoor heat exchanger or a coolant flow path to the other outdoor heat exchanger, with the outdoor heat exchanger located further down wind relative to the radiator, the other outdoor heat exchanger located further up wind relative to the radiator and the means for flow path switching selecting the coolant flow path to the outdoor heat exchanger during a heating operation and selecting the flow path to the other heat exchanger during a cooling operation to distribute the coolant.

By adopting the structure described above, in which the means for flow path switching selects a coolant flow path to ensure that the coolant is distributed to the outdoor heat exchanger provided further down wind relative to the radiator and having it the integrated fins, the energy of the exhaust heat from the cooling liquid distributed to the radiator is communicated to the coolant effectively to prevent frost formation at the outdoor heat exchanger with the integrated fins or to remove frost formed at the outdoor heat exchanger with the integrated fins, thereby achieving a great improvement in heating performance.

In addition, since, as the means for flow path switching selects a coolant flow path to ensure that the coolant is distributed to the outdoor heat exchanger provided further up wind relative to the radiator and having separate fins constituted as a separate member from the integrated fins during a cooling operation, the degree to which the exhaust heat of the cooling liquid distributed to the radiator is communicated to the coolant is reduced to achieve the full cooling performance.

It is to be noted that the integrated fins of the outdoor heat exchanger also constituting fins of the radiator and the separate fins of the outdoor heat exchanger with the separate fins may or may not be in contact with each other.

### BRIEF DESCRIPTION OF THE DRAWINGS

FIG. 1 is a block diagram of the frost formation preventing device employed in the air-conditioning system for vehicles in a first embodiment, a second embodiment and a third embodiment of the present invention;
FIG. 2 is a perspective of the parallel integrated heat exchanger in first, second, third, fourth, fifth and sixth embodiments of the present invention;
FIG. 3(a) presents a front view of the parallel integrated heat exchanger in FIG. 2 viewed from the side on which the outdoor heat exchanger is present;
FIG. 3(b) presents a front view of the parallel integrated heat exchanger in FIG. 2 viewed from the side on which the radiator is present;
FIG. 4 is a perspective of the heat exchanging units provided in the parallel integrated heat exchanger shown in FIG. 2;
FIG. 5 is a flowchart of the open / close control implemented on the first electromagnetic valve provided within the cooling liquid circulating cycle in the first embodiment of the present invention;
FIG. 6 is a flowchart of the open / close control implemented on the first electromagnetic valve provided within the cooling liquid circulating cycle in the second embodiment of the present invention;
FIG. 7 is a flowchart of the open / close control implemented on the first electromagnetic valve provided within the cooling liquid circulating cycle in the third embodiment of the present invention;
FIG. 8 is a block diagram of the air-conditioning system for vehicles in the fourth and fifth embodiments of the present invention;
FIG. 9(a) is a flowchart of the open / close control implemented on the second electromagnetic valve provided within cooling liquid circulating cycle in the fourth embodiment of the present invention;
FIG. 9(b) presents a graph indicating the relationships between the temperatures at the thermostat and the second electromagnetic valve provided in the cooling liquid circulating cycle and its open / close states in the fourth embodiment;
FIG. 10a is a flowchart of the open / close control implemented on the second electromagnetic valve provided within the cooling liquid circulating cycle in the fifth embodiment of the present invention;
FIG. 10b presents a graph indicating the relationships between the temperatures at the thermostat and the second electromagnetic valve provided in the cooling liquid circulating cycle and its open / close states in the fifth embodiment;
FIG. 11(a) is a flowchart of the open / close control implemented on the second electromagnetic valve provided within the cooling liquid circulating cycle in the sixth embodiment of the present invention;
FIG. 11(b) presents a graph indicating the relationships between the temperatures at the thermostat and the second electromagnetic valve provided in the cooling liquid circulating cycle and its open / close states in the sixth embodiment;
FIG. 12 is a block diagram of a portion of the heat-pump type freezing cycle in the air-conditioning system for vehicles adopted in a seventh embodiment of the present invention;
FIG. 13(a) schematically illustrates the heat transfer occurring between the heat exchangers in the seventh embodiment of the present invention;
FIG. 13(b) presents a perspective of the heat exchanging unit provided in the heat exchanger in the seventh embodiment;
FIG. 14 is a flowchart of the open / close control implemented on the flow path switching valve provided in the heat-pump type freezing cycle in the seventh embodiment and an eighth embodiment of the present invention;
FIG. 15 is a block diagram illustrating a portion of the heat-pump type freezing cycle in the air-conditioning system for vehicles in the eighth embodiment of the present invention;
FIG. 16(a) schematically illustrates the heat transfer occurring between the heat exchangers in the eighth embodiment of the present invention; and
FIG. 16(b) is a perspective of the heat exchanging unit provided in the heat exchanger in the eighth embodiment.

### BEST MODE FOR CARRYING OUT THE INVENTION

In order to describe the present invention in further detail, an explanation is given in reference to the attached drawings.

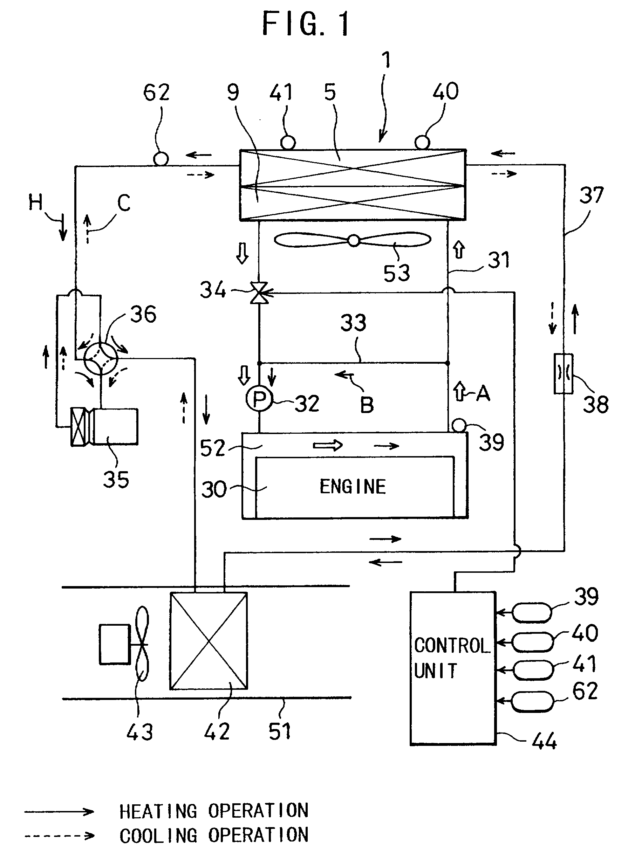

The air-conditioning system for vehicles shown in FIG. 1 comprises a heat-pump type freezing cycle for performing a cooling/heating operation of the air-conditioning system and a cooling liquid circulating cycle for cooling an engine 30.

The freezing cycle is provided with a compressor 35 that compresses a coolant and may be constituted of a rotary type compressor, a piston type compressor, a scroll type compressor or the like, a coolant flow path 37 through which the coolant is circulated, an indoor heat exchanger 42 that engages in heat radiation/cold radiation for the coolant inside the vehicle cabin, an orifice 38 constituting a means for coolant pressure reduction, an outdoor heat exchanger 5 that engages in heat radiation/cold radiation for the coolant outside the vehicle cabin and a four-way valve 36 that changes the direction along which the coolant is circulated in conformance to whether the air-conditioning system is engaged in a cooling operation or a heating operation. The indoor heat exchanger 42 is provided inside an air-conditioning duct 51 and an air blower fan 43 is provided on the upstream side of the indoor heat exchanger 42.

During a heating operation of the freezing cycle, the four-way valve 36 is switched as indicated by the solid lines in the figure to circulate the coolant along the direction indicated by the solid-line arrows H in the figure so that the indoor heat exchanger 42 is utilized as a condenser that radiates heat and the outdoor heat exchanger 5 is utilized as an evaporator which absorbs heat. In other words, the coolant compressed by the compressor 35 travels through the four-way valve 36 and reaches the indoor heat exchanger 42 where its heat is radiated and then heat exchange is performed for this heat and the air forcibly supplied by the air-blower fan 43 to be ultimately supplied into the vehicle cabin as warm air. After discharging its heat at the indoor heat exchanger 42, the coolant becomes depressurized at the orifice 38 and then reaches the outdoor heat exchanger 5 where it becomes evaporated and vaporized while absorbing the heat in the surrounding space.

During a cooling operation, on the other hand, the four-way valve 36 is switched as indicated by the dotted lines in the figure to circulate the coolant along the direction indicated by the arrows C in dotted lines and, as a result, a process which is the reverse of the heating operation cycle described above is implemented, in which the indoor heat exchanger 42 functions as an evaporator and the outdoor heat exchanger 5 functions as a condenser. The coolant compressed by the compressor 35 travels through the four-way valve 36, reaches the outdoor heat exchanger 5 where its heat is radiated, and then it absorbs heat from the air inside the air-conditioning duct 51 at the indoor heat exchanger 42 to become evaporated and vaporized. Then, the air forcibly supplied by the air-blower fan 43 undergoes a heat exchanging process by traveling through the indoor heat exchanger 42 and is ultimately supplied into the vehicle cabin as cool air.

The cooling liquid circulating cycle for cooling the engine 30 is provided with a cooling liquid flow path 31 through which the cooling liquid drawn out of a water jacket 52 provided around the engine 30 is circulated, a radiator 9 that discharges the heat of the cooling liquid, a water pump 32 provided to circulate the cooling liquid inside the cooling liquid flow path 31, a sub-flow path 33 through which the cooling liquid is circulated without traveling through the radiator 9 and a first electromagnetic valve 34 provided in the cooling liquid flow path 31 and controlled to open / close in conformance to a control signal provided by a control unit 44 which is to be detailed later.

When the first electromagnetic valve 34 is open, the cooling liquid flows inside the cooling liquid flow path 31 as indicated by the arrows A to circulate a path which includes both the engine 30 and the radiator 9. When the first electromagnetic valve 34 is closed, on the other hand, the cooling liquid circulates through the path through which it travels through the sub-flow path 33 and bypasses the radiator 9, as indicated by the arrows B.

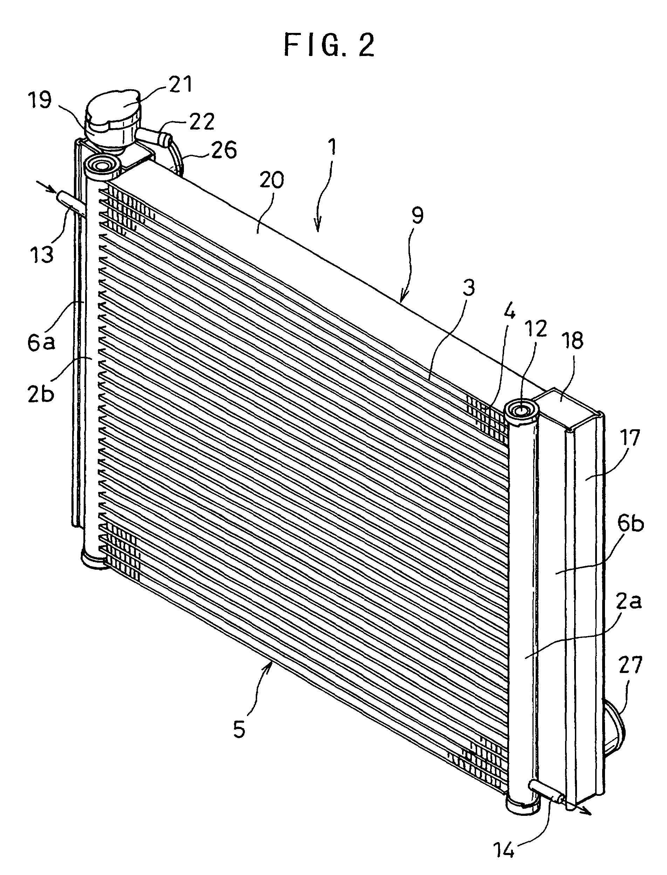

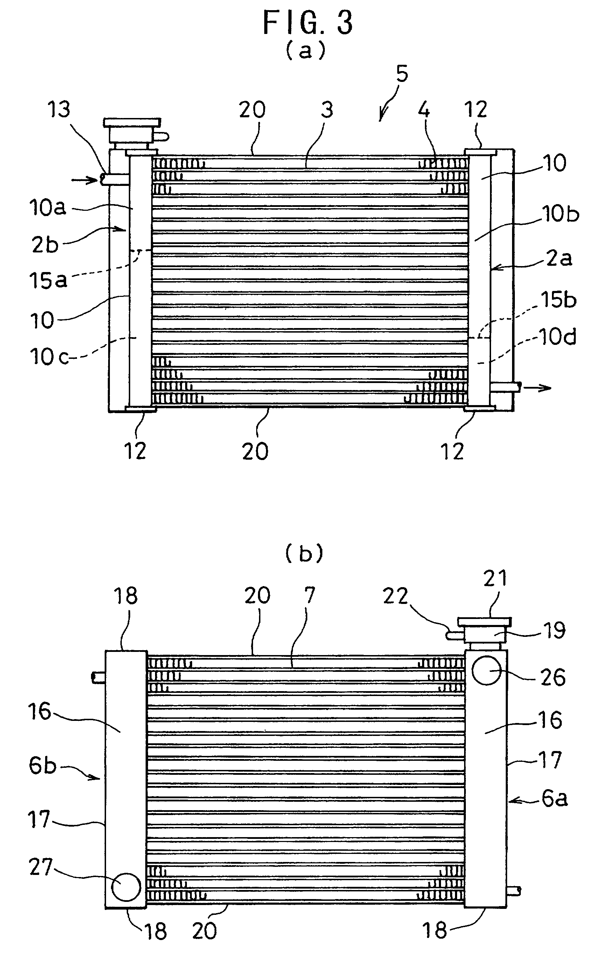

The entire structures of the outdoor heat exchanger 5 and the radiator 9 are both constituted of an aluminum alloy, and the outdoor heat exchanger 5 and the radiator 9 are formed as an integrated unit constituting a parallel integrated heat exchanger 1 shown in FIG. 2, FIGS. 3(a) and 3(b) and FIG. 4.

The outdoor heat exchanger 5 is provided with a pair of headers 2a and 2b and a plurality of flat tubes 3communicating between the pair of headers 2a and 2b, whereas the radiator 9 is provided with a pair of headers 6a and 6b and a plurality of flat tubes 7 communicating between the pair of headers 6a and 6b. Heat exchanging units 11 are constituted by alternately laminating the plurality of tubes 3 and 7 and corrugated fins 4 and then by brazing the assembly. Louvers 4a are formed by cutting the fins 4 to improve the heat exchanging rate and the fins 4 are formed as an integrated member shared by the heat exchanging units of the outdoor heat exchanger 5 and the radiator 9.

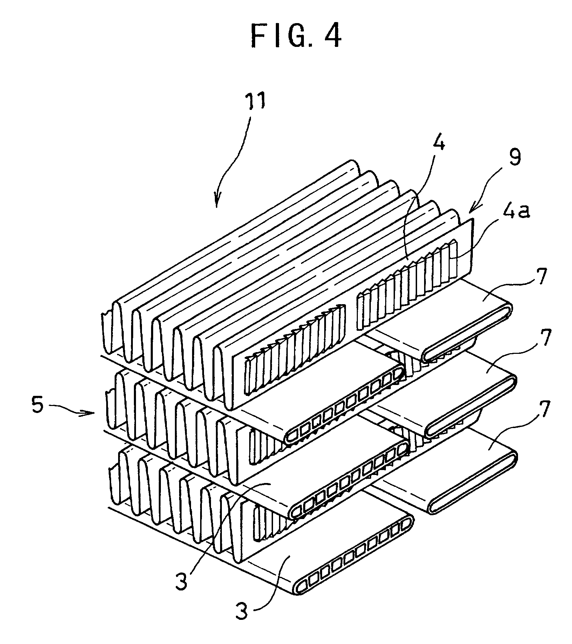

The tubes 3 of the outdoor heat exchanger 5 are flat extruded tubes shown in FIG. 4, and the headers 2a and 2b of the outdoor heat exchanger 5 are each constituted by closing off the openings of a cylindrical member 10 at the two ends with lids 12 with a plurality of tube insertion holes (not shown) at which the ends of the tubes 3 are inserted formed at the circumferential wall of the cylindrical member 10. In addition, partitioning walls 15a and 15b are provided inside the cylindrical members 10 to divide the space inside the cylindrical members 10 into a plurality of flow path chambers 10a, 10b, 10c and 10d, with the flow path chamber 10a on the upstream-most side communicating with an inflow pipe 13 through which the coolant flows in and an outflow pipe 14 through which the cooling flows out provided at the flow path chamber 10d on the down wind-most side. As a result, the coolant is made to make one-and-a-half round trips (three passes) from the flow path chamber 10a on the upstream-most side to the flow path chamber 10b, to the flow path chamber 10c and then to the flow path chamber 10d via the tubes 3. It is to be noted that the internal structure of the cylindrical members 10 is not limited to the structural details described above, and they may be changed as necessary to change the number of coolant passes.

The tubes 7 of the radiator 9, on the other hand, are flat tubes with no internal partitioning, and the headers 6a and 6b of the radiator 9 are each formed as a cylindrical body with a rectangular cross section constituted of a first header member 16 with its cross section having a U-shape at which tube insertion holes (not shown) where the ends of the tubes 7 are inserted, are formed and a second header member 17 bridging the side walls of the first header member 16 and constituting the circumferential wall of the header 6a together with the first header member 16, with the openings at the two ends of the cylindrical body each closed off with a blocking plate 18.

An inflow pipe 26 through which a fluid flows in is provided at one of the headers at the radiator 9, i.e., the header 6a. In addition, a cooling liquid induction portion 19 through which a cooling liquid used to as the fluid is induced is provided at the header 6a. The cooling liquid induction portion 19, with its opening closed off with a cap 21 provided with a pressure valve, is provided with an overflow valve 22, and an outflow pipe 27 through which the fluid flows out is provided at the other header 6b. In this embodiment, the internal spaces of the two headers 6a and 6b are not partitioned so as to allow the cooling liquid having flowed in through the inflow pipe 26 to travel from one header 6a to the other header 6b via all the tubes 7 and to flow out through the outflow pipe 27.

In this structure, a side plate 20 constituted of a single plate and shared by the outdoor heat exchanger 5 and the radiator 9 is mounted on each of the two outer sides along the direction in which the tubes 3 and 7 and the fins 4 are laminated. With these side plates 20 provided as described above, the outdoor heat exchanger 5 and the radiator 9 are constituted as an integrated unit in which the outdoor heat exchanger 5 is located up wind of the air flow caused by the rotation of a cooling fan 53 (see FIG. 1) and the radiator 9 is located down wind of the air flow.

In addition, in the air-conditioning system for vehicles shown in FIG. 1, reference number 39 indicates a cooling liquid temperature sensor that detects a temperature X of the cooling liquid, reference number 40 indicates a heat exchanger temperature sensor that detects the surface temperature Y of the outdoor heat exchanger 5 based upon the sensed heat of the fins 4 of the heat exchanging unit 11 (see FIG. 4) of the outdoor heat exchanger 5 or the sensed heat of the air between the fins 4 and reference number of 44 indicates a control unit that implements control on the compressor 35, the four-way valve 36 and the like and also implements open / close control on the first electromagnetic valve 34 in conformance to signals provided by the cooling liquid temperature sensor 39 and the heat exchanger surface temperature sensor 40. It is to be noted that the heat exchanger temperature sensor 40 is not restricted by the structural details above, as long as it is capable of detecting the surface temperature of the outdoor heat exchanger 5.

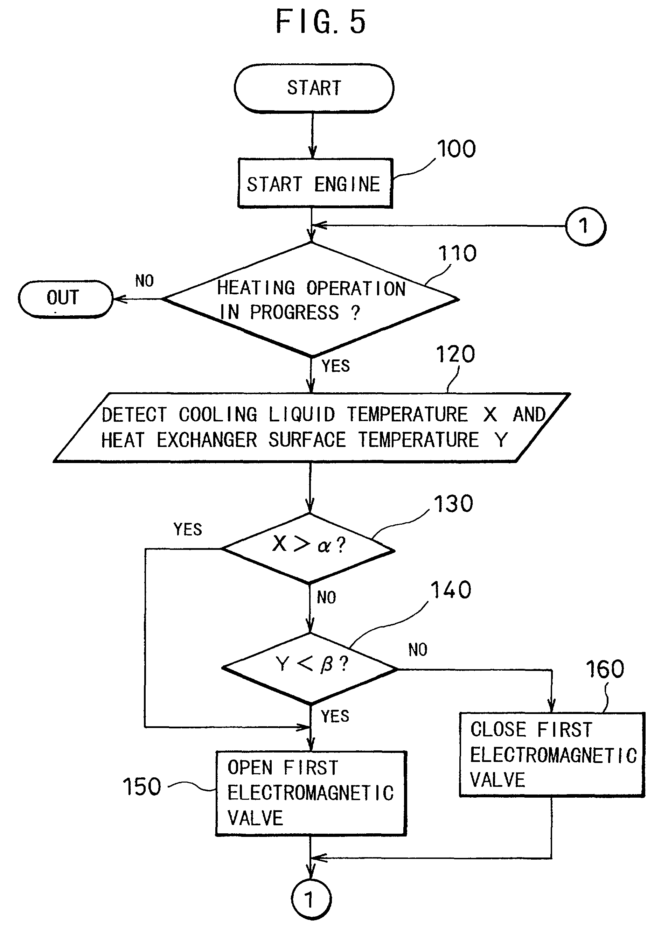

The following is an explanation of the frost formation preventing control achieved in the air-conditioning system for vehicles in the first embodiment, given in reference to the flowchart in FIG. 5.

First, in step 100, the following control is started up from the main control routine by starting up the engine 30, and a decision is made in step 110 as to whether or not a heating operation of the air-conditioning system has been requested. If it is decided in step 110 that a heating operation has not been requested, the operation exits this control to return to the main control routine, whereas if it is decided that a heating operation has been requested, the cooling liquid temperature X is detected by the cooling liquid temperature sensor 39 and the surface temperature Y of the outdoor heat exchanger 5 is detected by the heat exchanger surface temperature sensor 40 in step S 120.

Then, in step 130, a decision is made as to whether or not the cooling liquid temperature X is higher than a specific temperature α. This specific temperature α may be set at the minimum temperature (approximately 80°C) within the temperature range over which the performance of the cooling liquid can be utilized effectively, for instance. At this point, if it is decided that the cooling liquid temperature X is higher than the specific temperature α, the first electromagnetic valve is opened in response to a signal provided by the control unit 44 in step 150, and then the operation returns to step 110.

If, on the other hand, it is decided in step 130 that the cooling liquid temperature X is not higher than the specific temperature α, a decision is made in step 140 as to whether or not the surface temperature Y of the outdoor heat exchanger 5 detected by the heat exchanger temperature sensor 40 is lower than a specific temperature β (e.g. 0°C) at which the heat exchanging unit 11 of the outdoor heat exchanger 5 is assumed to be in an environment in which frost formation may occur.

If it is decided in step 140 that the surface temperature Y is lower than the specific temperature β, the first zero a electromagnetic valve 34 is opened in response to a signal provided by the control unit 44 in step 150 before the operation returns to step 110. If, on the other hand, it is decided in step 138 that the surface temperature Y is not lower than the specific temperature β, the first electromagnetic valve 34 is closed in response to a signal provided by the control unit 44 in step 160 to allow the cooling liquid to travel through the sub-flow path 33 to circulate in the engine 30 (see FIG. 1).

In the first embodiment, if the surface temperature Y of the outdoor heat exchanger 5 detected by the heat exchanger temperature sensor 40 is equal to or lower than the specific temperature β at which the outdoor heat exchanger 5 needs to be heated, the first electromagnetic valve 34 is opened even when the cooling liquid temperature X detected by the cooling liquid temperature sensor 39 is equal to or lower than the specific temperature α at which the cooling liquid does not need to be cooled. As a result, the cooling liquid is distributed to the radiator 9 so that the heat of the cooling liquid flowing into the radiator 9 is communicated to the outdoor heat exchanger 5 the fins 4 to prevent frost formation at the outdoor heat exchanger 5 or to remove frost formed at the outdoor heat exchanger 5 and, at the same time, to achieve an improvement in the heating function of the air-conditioning system.

In the following explanation of other embodiments of the present invention given in reference to the drawings, the same reference numbers are assigned to components identical to those in the first embodiment and components achieving advantages similar to those in the first embodiment to preclude the necessity for repeated explanation thereof.

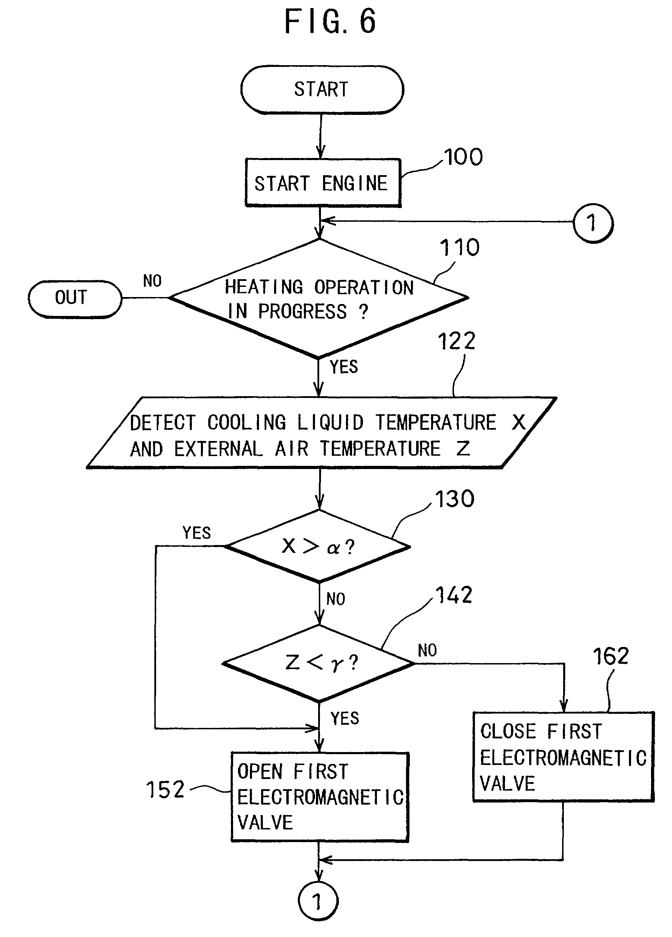

In the air-conditioning system for vehicles in the second embodiment which is provided with an external air temperature sensor 41 in FIG. 1 for detecting the external air temperature, the control unit 44 engages in open / close control on the first electromagnetic valve 34 as shown in FIG. 6 in conformance to signals provided by the cooling liquid temperature sensor 39 and the external air temperature sensor 41.

The open / close control implemented on the first electromagnetic valve 34 is now explained in reference to FIG. 6. Following the processing in steps 100 and 110 described earlier, if it is decided in step 110 that a heating operation has been requested, the cooling liquid temperature X is detected by the cooling liquid temperature sensor 39 and the external air temperature Z is detected by the external air temperature sensor 41 in step 122.

Then, in step 130, a decision is made as to whether or not the cooling liquid temperature X is higher than the specific temperature α, and if it is decided that the cooling liquid temperature X is higher than the specific temperature α, the first electromagnetic valve 34 is opened in response to a signal provided by the control unit 44 in step 152 before the operation returns to step 110. If, on the other hand, it is decided in step 130 that the cooling liquid temperature X is not higher than the specific temperature α, a decision is made in step 142 as to whether or not the external air temperature Z is lower than a specific temperature γ (e.g. 0°C) at which the heat exchanging unit 11 of the outdoor heat exchanger 5 is assumed to be in an environment in which frost formation may occur.

If it is decided in step 142 that the external air temperature Z is lower than the specific temperature γ, the first electromagnetic valve 34 is opened in response to a signal provided by the control unit 44 in step 152 before the operation returns to step 110. If, on the other hand, it is decided in step 142 that the external air temperature Z is not lower than the specific temperature γ, the first electromagnetic valve 34 is closed in response to a signal provided back the control unit 44 in step 162, and then the operation returns to step 110 to allow the cooling liquid to travel through the sub-flow path 33 to circulate inside the engine 30 (see FIG. 1).

In the second embodiment described above, if the external air temperature Z detected by the external air temperature sensor 41 is equal to or lower than the specific temperature γ at which the outdoor heat exchanger 5 needs to be heated, the first electromagnetic valve 34 is opened to allow the cooling liquid to be distributed to the radiator 9 even when the cooling liquid temperature X detected by the cooling liquid temperature sensor 39 is equal to or lower than the specific temperature α at which the cooling temperature does not need to be cooled. Thus, advantages similar to those achieved in the first embodiment are realized.

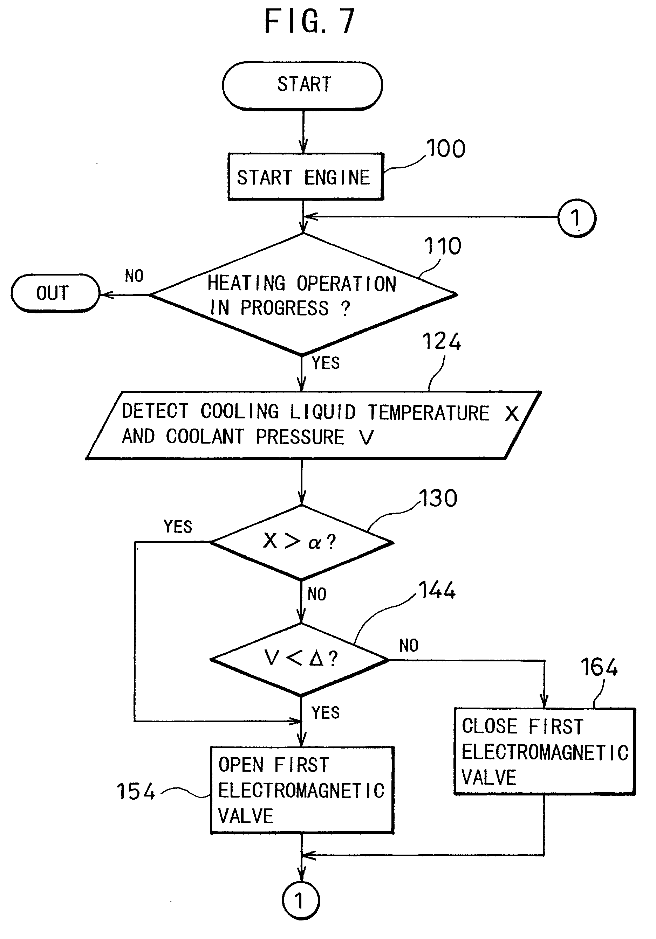

In the air-conditioning system for vehicles in the third embodiment which is provided with a heat exchanger pressure sensor 62 in FIG. 1 that detects the coolant pressure at the intake or the outlet of the outdoor heat exchanger 5, the control unit 44 implements open/close control on the first electromagnetic valve 34 as shown in FIG. 7 in conformance to signals provided by the cooling liquid temperature sensor 39 and the heat exchanger pressure sensor 62.

The open / close control implemented on the first electromagnetic valve 34 is now explained in reference to FIG. 7. Following the processing in steps 100 and 110 described earlier, if it is decided in step 110 that a heating operation has been requested, the cooling liquid temperature X is detected by the cooling liquid temperature sensor 39 and the coolant pressure V at the outlet of the outdoor heat exchanger 5 during a heating operation is detected by the heat exchanger pressure sensor 62 in step 124.

Then, in step 130, a decision is made as to whether or not the cooling liquid temperature X is higher than the specific temperature α, and if it is decided that the cooling liquid temperature X is higher than the specific temperature α, the first electromagnetic valve 34 is opened in response to a signal provided by the control unit 44 in step 154 before the operation returns to step 110. If, on the other hand, it is decided in step 130 that the cooling liquid temperature X is not higher than the specific temperature α, a decision is made in step 144 as to whether or not the coolant pressure V is lower than a specific pressure Δ at which the heat exchanging unit 11 of the outdoor heat exchanger 5 is assumed to be in an environment in which frost formation may occur.

If it is decided in step 144 that the coolant pressure V is lower than the specific pressure Δ, the first electromagnetic valve 34 is opened in response to a signal provided by the control unit 44 in step 154 before the operation returns to step 110. If, on the other hand, it is decided in step 144 that the coolant pressure V is not lower than the specific pressure Δ, the first electromagnetic valve 34 is closed in response to a signal provided by the control unit 44 in step 164, and then the operation returns to step 110 to allow the cooling liquid to travel through the sub-flow path 33 to circulate inside the engine 30 (see FIG. 1).

In the third embodiment, if the coolant pressure V detected by the heat exchanger pressure sensor 62 is equal to or lower than the specific pressure Δ at which the heat exchanging unit 11 of the outdoor heat exchanger 5 is assumed to be in an environment in which frost formation may occur or frost has been formed, the first electromagnetic valve 34 is opened to distribute the cooling liquid to the radiator 9 even when the cooling liquid temperature X detected by the cooling liquid temperature sensor 39 is equal to or lower than the specific temperature α at which the cooling liquid does not need to be cooled. As a result, advantages similar to those achieved in the first embodiment are realized.

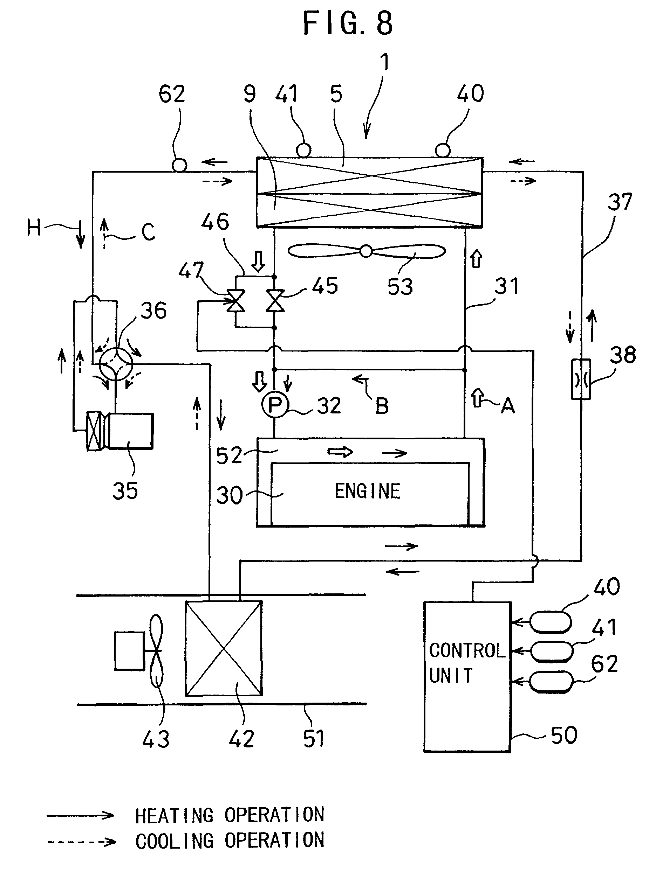

The frost formation preventing device in the air-conditioning system for vehicles in the fourth embodiment shown in FIG. 8 is constituted by providing a thermostat 45 in place of the first electromagnetic valve 34 in the first embodiment, forming a bypass flow path 46 for bypassing the thermostat 45 at the cooling liquid flow path 37 and providing a second electromagnetic valve 47 parallel to the thermostat 45 inside the bypass flow path 46, with the second electromagnetic valve 47 controlled by a control unit 50 to open / close in response to a signal provided by the heat exchanger temperature sensor 40.

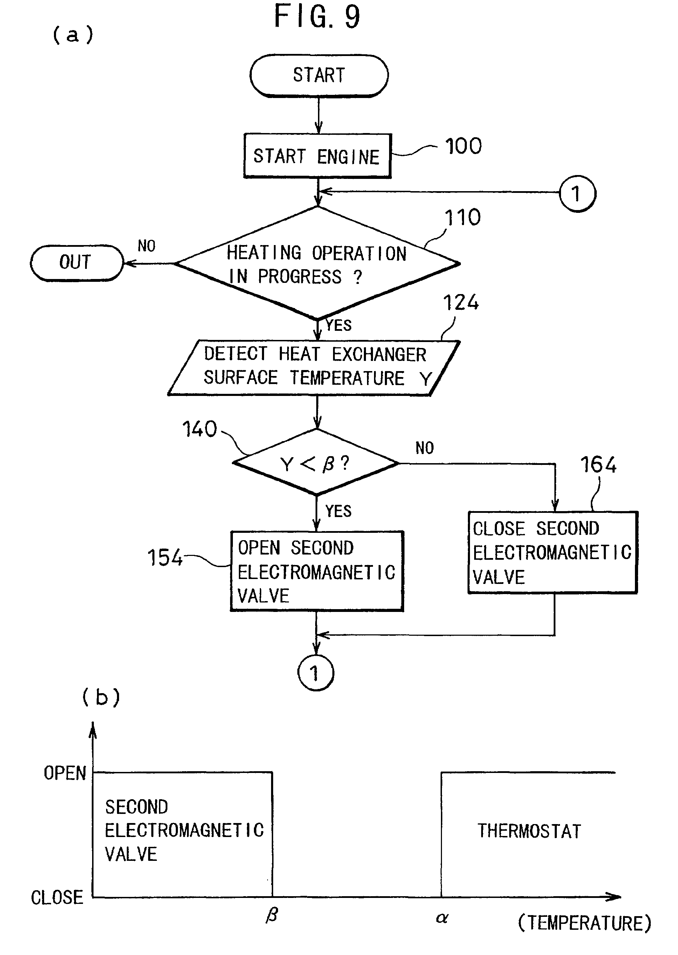

The thermostat 45, which is not controlled by another mechanism, opens/closes the valve in response to the thermal expansion of a metal material, a resin material or the like resulting from the temperature increase in the cooling liquid, and the valve is opened when the temperature of the cooling liquid reaches a level equal to or higher than the specific temperature α (see FIG. 9(b)). In addition, of the open / close control is implemented on the second electromagnetic valve 47 as described below in conformance to a control signal provided by the control unit 50 which is generated based upon the surface temperature Y of the outdoor heat exchanger 5 detected by the heat exchanger temperature sensor 40. It is to be noted that other structural features adopted in the heat-pump type freezing cycle and the cooling liquid circulating cycle are identical to those in the first embodiment.

Now, in reference to FIG. 9(a), the open / close control implemented on the second electromagnetic valve 47 by the control unit 50 is explained. Following the processing in steps 100 and 110 described earlier, if it is decided in step 110 that a heating operation has been requested, the surface temperature Y of the outdoor heat exchanger 5 is detected by the heat exchanger temperature sensor 40 in step 124, and a decision is made in step 140 as to whether or not the surface temperature Y is lower than the specific temperature β.

If it is decided in step 140 that the surface temperature Y is lower than the specific temperature β, the second electromagnetic valve 47 is opened in response to a signal provided by the control unit 50 in step 154 before the operation returns to step 110. If, on the other hand, it is decided in step 140 that the surface temperature Y is not lower than the specific temperature β, the second electromagnetic valve 47 is closed in response to a signal provided by the control unit 50 in step 164 before the operation returns to step 110 to allow the cooling liquid to travel through the sub-flow path 33 to circulate inside the engine 30 (see FIG. 8).

In the fourth embodiment, if the temperature of the cooling liquid is equal to or higher than the specific temperature α at which the cooling liquid needs to be cooled or of the surface temperature Y is in the range equal to or below the specific temperature β at which frost formation may occur at the outdoor heat exchanger 5 and therefore the outdoor heat exchanger 5 needs to be heated, the thermostat 45 or the second electromagnetic valve 47 is opened to distribute the cooling liquid to the radiator 9, as shown in FIG. 9(b). As a result, the heat of the cooling liquid flowing into the radiator 9 is communicated to the outdoor heat exchanger 5 via the fins 4, to prevent frost formation at the outdoor heat exchanger 5 or to remove frost formed at the outdoor heat exchanger 5 and also to achieve an improvement in the heating performance of the air-conditioning system.

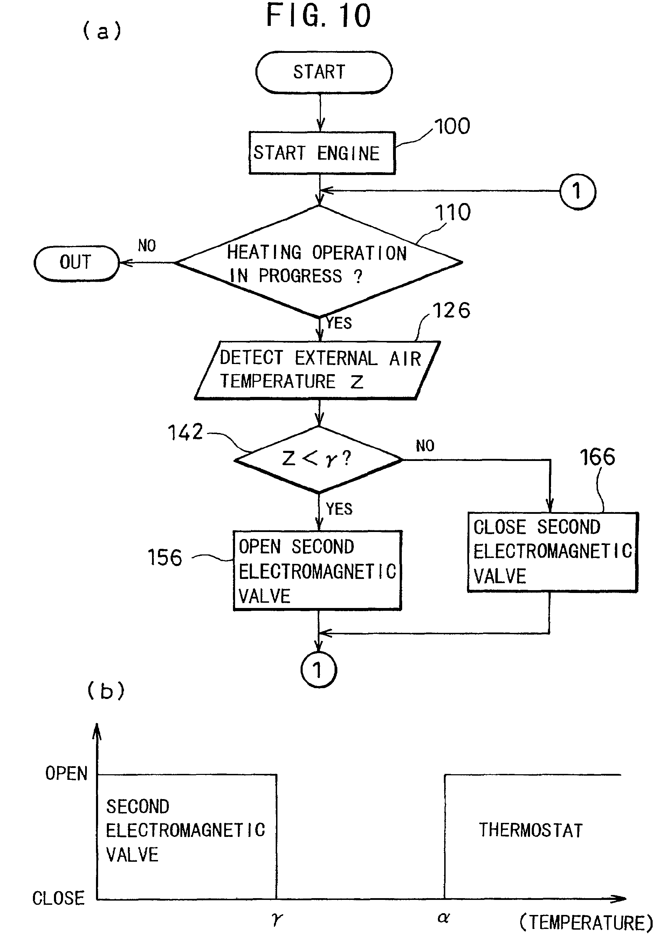

In addition, in the air-conditioning system for vehicles in the fifth embodiment which is provided with an external air temperature sensor 41 shown in FIG. 8 for detecting the temperature of the external air, the control unit 50 implements open / close control on the second electromagnetic valve 47 as shown in FIG. 10a in conformance to a signal provided by the external air temperature sensor 41. It is to be noted that other structural features are identical to those adopted in the fourth embodiment.

In reference to FIG. 10a, the open / close control implemented on the second electromagnetic valve 47 in the fifth embodiment is explained. Following the processing in steps 100 and 110, if it is decided in step 110 that a heating operation has been requested, the external air temperature Z is detected by the external air temperature sensor 41 in step 126 and a decision is made in step 142 as to whether or not the external air temperature Z is lower than the specific temperature γ at which the outdoor heat exchanger 5 is assumed to be in an environment in which frost formation may occur.

If it is decided in step 142 that the external air temperature Z is lower than the specific temperature γ, the second electromagnetic valve 47 is opened in response to a signal provided by the control unit 50 in step 156 before the operation returns to step 110. If, on the other hand, it is decided in step 142 that the external air temperature Z is not lower than the specific temperature γ, the second electromagnetic valve 47 is closed in response to a signal provided by the control unit 50 in step 166 before the operation returns to step 110 to allow the cooling liquid to travel through the sub-flow path 33 to circulate inside the engine 30 (see FIG. 8).

As illustrated in FIG. 10b, in the fifth embodiment, if the temperature of the cooling liquid is equal to or higher than the specific temperature α at which the cooling liquid needs to be cooled or the external air temperature Z is in the range equal to or below the specific temperature γ at which frost formation may occur at the outdoor heat exchanger 5 and thus, the outdoor heat exchanger 5 needs to be heated, the thermostat 45 or the second electromagnetic valve 47 is opened to distribute the cooling liquid to the radiator 9.

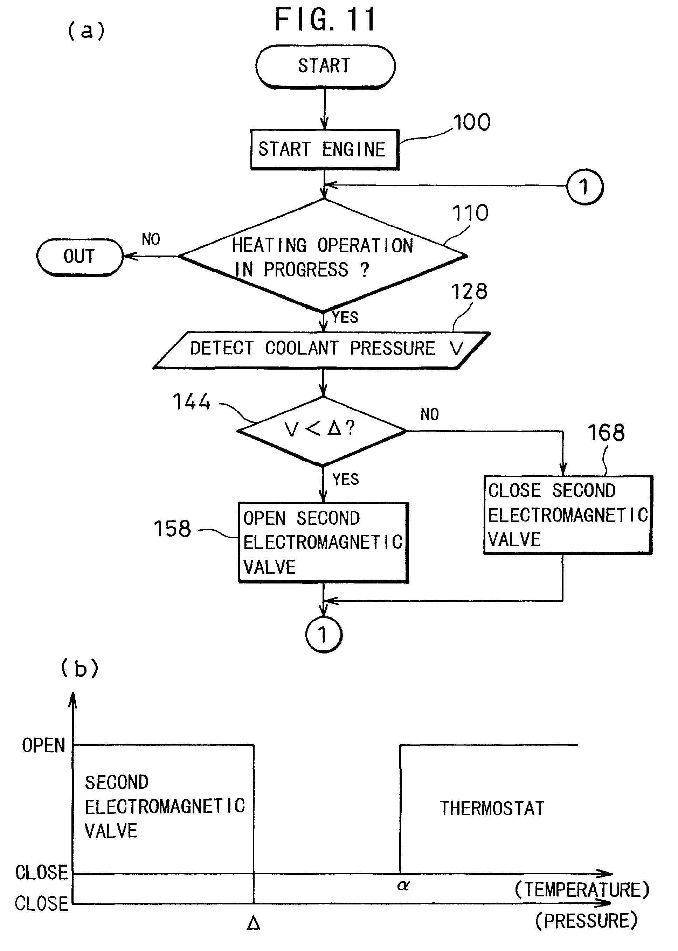

In the air-conditioning system for vehicles in the sixth embodiment which is provided with a heat exchanger pressure sensor 62 in FIG. 8 that detects the coolant pressure at the intake or the outlet of the outdoor heat exchanger 5, the control unit 50 implements open / close control on the second electromagnetic valve 47 as shown in FIG. 11(a) in conformance to a signal provided by the heat exchanger pressure sensor 62. It is to be noted that other structural features are identical to those assumed in the fourth embodiment.

In reference to FIG. 11(a), the open / close control implemented on the second electromagnetic valve 47 in the sixth embodiment is explained. Following the processing in steps 100 and 110, if it is decided in step 110 that a heating operation has been requested, the coolant pressure V is detected by the heat exchanger pressure sensor 62 in step 128, and a decision is made in step 144 as to whether or not the coolant pressure V is lower than the specific pressure Δ at which the outdoor heat exchanger 5 is assumed to be in an environment in which frost formation may occur.

If it is decided in step 144 that the coolant pressure V is lower than the specific pressure Δ, the second electromagnetic valve 47 is opened in response to a signal provided by the control unit 50 in step 158 before the operation returns to step 110. If, on the other hand, it is decided in step 144 that the coolant pressure V is not lower than the specific pressure Δ, the second electromagnetic valve 47 is closed in response to a signal provided by the control unit 50 in step 168 before the operation returns to step 110 to allow the cooling liquid to travel through the sub-flow path 33 to circulate inside the engine 30 (see FIG. 8).

As shown in FIG. 11(b), in the sixth embodiment, if the temperature of the cooling liquid is equal to or higher than the specific temperature α at which the cooling liquid needs to be cooled or the coolant pressure V is in the range equal to or lower than the specific pressure Δ at which frost formation may occur at the outdoor heat exchanger 5 and thus, the outdoor heat exchanger 5 needs to be heated, the thermostat 45 or the second electromagnetic valve 47 is opened to distribute the cooling liquid to the radiator 9.

It is to be noted that in the fourth, fifth and sixth embodiments, the individual open / close valves are each controlled to open / close in correspondence to the temperature at a given location. Namely, since the thermostat 45 only needs to open / close in correspondence to the cooling liquid temperature X and the second electromagnetic valve 47 only needs to open / close in correspondence to the surface temperature Y of the outdoor heat exchanger 5, the external air temperature Z or the coolant pressure V at the intake or the outlet of the outdoor heat exchanger 5, they not required to have a complicated structure.

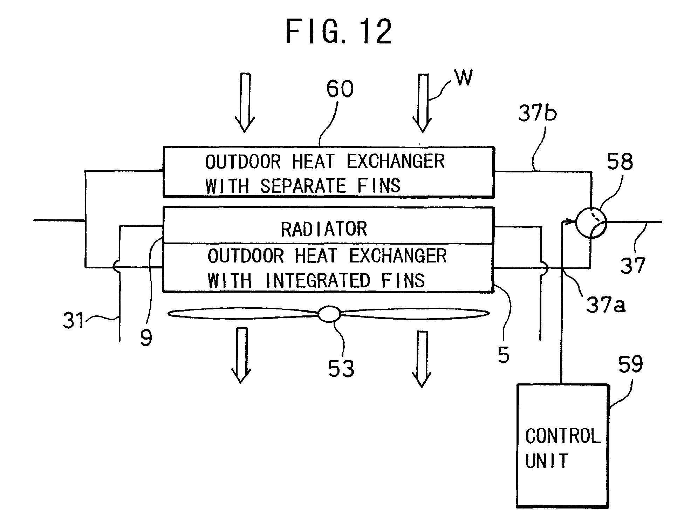

Next, the seventh embodiment of the present invention is explained in reference to FIGS. 12, 13a, 13b and 14. The heat-pump type freezing cycle in the seventh embodiment comprises an outdoor heat exchanger 5 constituting an integrated unit together with the radiator 9 (hereafter referred to as an outdoor heat exchanger with integrated fins), an outdoor heat exchanger 60 with separate fins provided parallel to the outdoor heat exchanger 5 with integrated fins and a flow path switching valve 58 provided to select a coolant distribution path to the outdoor heat exchanger 5 with integrated fins or a coolant distribution path to the outdoor heat exchanger 60 with separate fins.

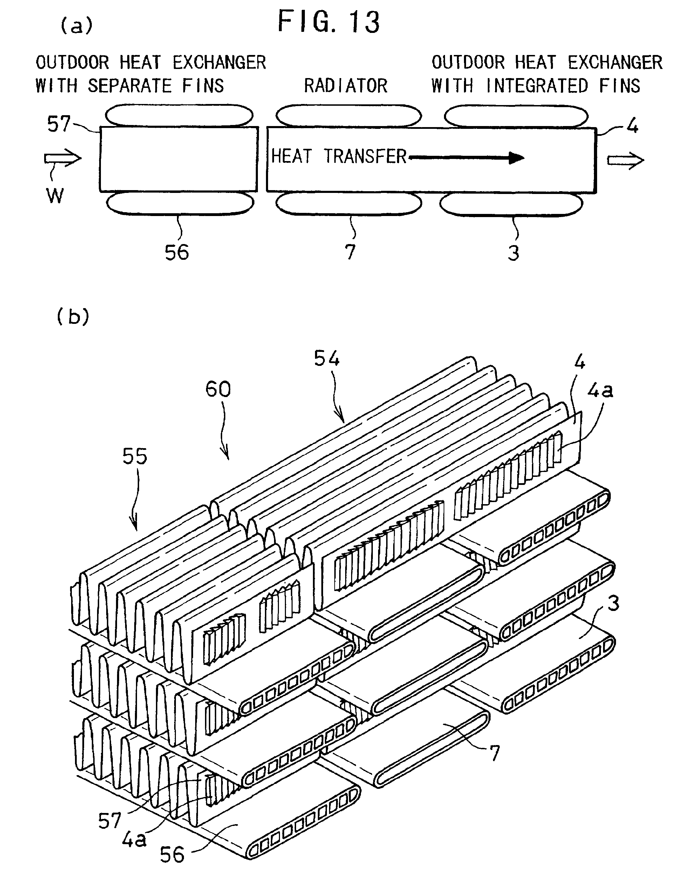

As shown in FIG. 13(b), the heat exchanging unit of the outdoor heat exchanger 5 with integrated fins is included in an integrated heat exchanging unit 54 constituted by laminating the tubes 3 through which the coolant is distributed alternately with the fins (hereafter referred to as integrated fins) 4 formed as a common member laminating the tubes 7 of the radiator 9 through which the cooling liquid is distributed also alternately with the fins, and then brazing the assembly. The tubes 3 of the outdoor heat exchanger 5 with integrated fins are positioned further down wind relative to the air flow W caused by the rotation of the cooling fan 53 than the tubes 9*[1] of the radiator 9.

In addition, a heat exchanging unit 55 of the outdoor heat exchangers 60 with separate fins is constituted by alternately laminating flat tubes 56 through which the coolant is distributed and separate fins 57 having the louvers 4a formed therein and formed as a separate member from the integrated fins 4 and then by brazing the assembly. The heat exchanging unit 55 of the outdoor heat exchanger 60 with separate fins is positioned over a specific distance from the integrated heat exchanging unit 54 so that it is located further up wind relative to the integrated heat exchanging unit 54. It is to be noted that while the integrated fins 4 and the separate fins 57 are formed at the same phase in FIG. 13(b), the present invention is not restricted by these particulars and the fins may be formed at the same phase or at different phases.

As described above, since the integrated heat exchanging unit 54 is constituted of the heat exchanging unit of the radiator 9 and the heat exchanging unit of the outdoor heat exchanger 5 with integrated fins integrated via the integrated fins 4 and the outdoor heat exchanger 5 with integrated fins is positioned further down wind relative to the radiator 9, the exhaust heat from the engine cooling liquid is communicated to the coolant of the air-conditioning system in a desirable manner via the integrated fins or through the flow of air caused by the cooling fan 53. However, hardly any exhaust heat from the radiator 9 is communicated to the heat exchanging unit 55 of the a outdoor heat exchanger 60 with separate fins, which is provided as a separate unit from the integrated heat exchanging unit 54 and positioned further up wind relative to the radiator 9.

The flow path switching valve 58, which is provided at a branching position from which the coolant flow path 37, a flow path 37a communicating with the outdoor heat exchanger 5 with integrated fins and a flow path 37b communicating with the outdoor heat exchanger 60 with separate fins extend separately from each other, selects either the flow path 37a or the flow path 37b as the coolant distribution path in response to a control signal output by a control unit 59 in conformance to the heating/cooling operation state of the air-conditioning system.

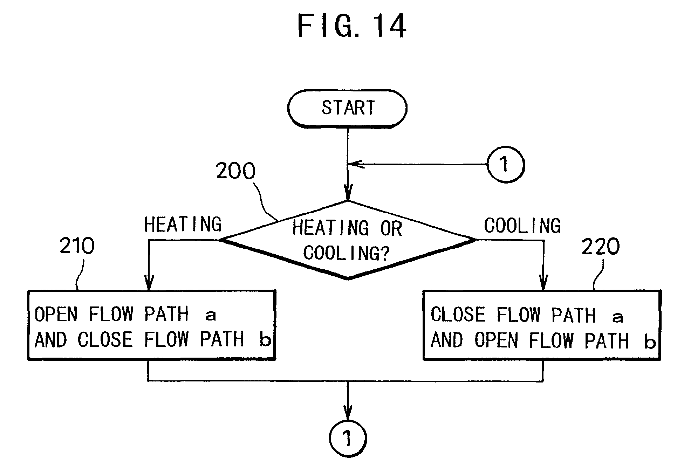

The switching control at the switching valve 58 may be implemented as shown in FIG. 14, for instance. In step 200, the control unit 59 makes a decision as to whether the air-conditioning system is engaged in a heating operation or a cooling operation. If it is decided in step 200 that a heating operation is in progress, the flow path switching valve 58 is controlled in conformance to a control signal provided by the control unit 59 in step 210 to open up the flow path 37a to the outdoor heat exchanger 5 with integrated fins and close the flow path 37b to the outdoor heat exchanger 60 with separate fins before the operation returns to step 200. If, on the other hand, it is decided in step 200 that a cooling operation is in progress, the flow path switching valve 58 is controlled in conformance to the control signal provided by the control unit 59 in step 220 to close the flow path 37a to the outdoor heat exchanger 5 with integrated fins and open the flow path 37b to the outdoor heat exchanger 60 with separate fins before the operation returns to step 200.

It is to be noted that any one of the first ∼ sixth embodiments may be adopted to constitute parts other than those described above.

Thus, during a heating operation, frost formation is prevented or frost that has been formed is removed through the cooling liquid circulating path control implemented in one of the first ∼ sixth embodiments, and the coolant is distributed to the tubes 3 that are linked with the tubes 7 of the radiator 9 via the integrated fins 4 and provided further down wind relative to the tubes 7 of the radiator 9. As a result, as shown in FIG. 13(a), the exhaust heat of the cooling liquid is communicated to the coolant in a desirable manner to achieve a greater improvement in the heating performance of the air-conditioning system. During a cooling operation, the coolant is distributed to the tubes 56 and closed between the separate fins 57 formed as a separate member from the integrated fins 4 and located further up wind relative to the tubes 7 of the radiator 9 and, as a result, hardly any exhaust heat from the cooling liquid is communicated to the coolant, to achieve the full cooling function.

In addition, the structure described above may be particularly ideal in an application employing a heat-pump type air-conditioning system installed in a vehicle in which the temperature of the engine cooling liquid does not rise to a very high level as in a hybrid vehicle. Since a hybrid vehicle may be driven on a motor without engaging the engine and the engine is operated with a high degree of efficiency so that the quantity of heat generated by the engine itself is relatively small even when the engine is engaged, the heating performance of the air-conditioning system tends to become compromised due to an insufficient quantity of heat in the engine cooling liquid. In particular, when the vehicle is not running and the engine is not engaged, the temperature of the engine cooling liquid is low and, as a result, a sufficient level of output temperature cannot be assured. Accordingly, auxiliary heating is normally provided by using a PTC heater or the like. However, this solution is not ideal since it consumes a great deal of power, resulting in poor energy efficiency and it does not achieve efficient heating either.

Accordingly, in the structure adopted in the seventh embodiment, the heat exchanger 5 with integrated fins utilized in a heating operation is provided further down wind relative to the radiator 9 to ensure that the exhaust heat of the engine cooling liquid is communicated to the coolant in the air-conditioning system in a desirable manner. As a result, the exhaust heat of the cooling liquid is utilized in an effective manner to achieve an improvement in the heating performance. In addition, since the temperature of the radiator 9 does not become lower than the external air temperature, an improvement in the heating performance is achieved with a high degree of reliability compared to the heating performance realized in a structure having the external air alone for the coolant heat absorption source. Furthermore, the coolant absorbs the heat from the radiator 9 even when the temperature of the cooling liquid is low and control is implemented to ensure that the cooling fan 53 is not engaged, since the integrated fins 4 are linked with the radiator 9.

In this structure, in which the coolant is distributed to the outdoor heat exchanger 60 with separate fins provided further up wind relative to the radiator 9 and having the heat exchanging unit 55 separate from the integrated heat exchanging unit 54 during a cooling operation, the cooling performance is not inhibited by the heat from the radiator 9.

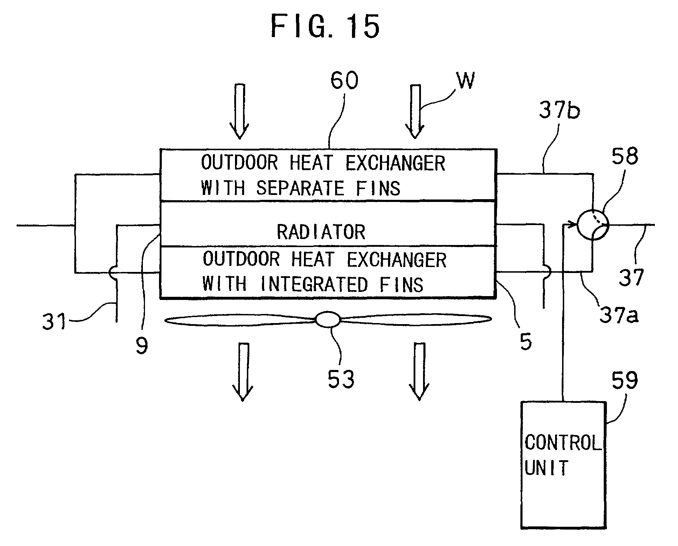

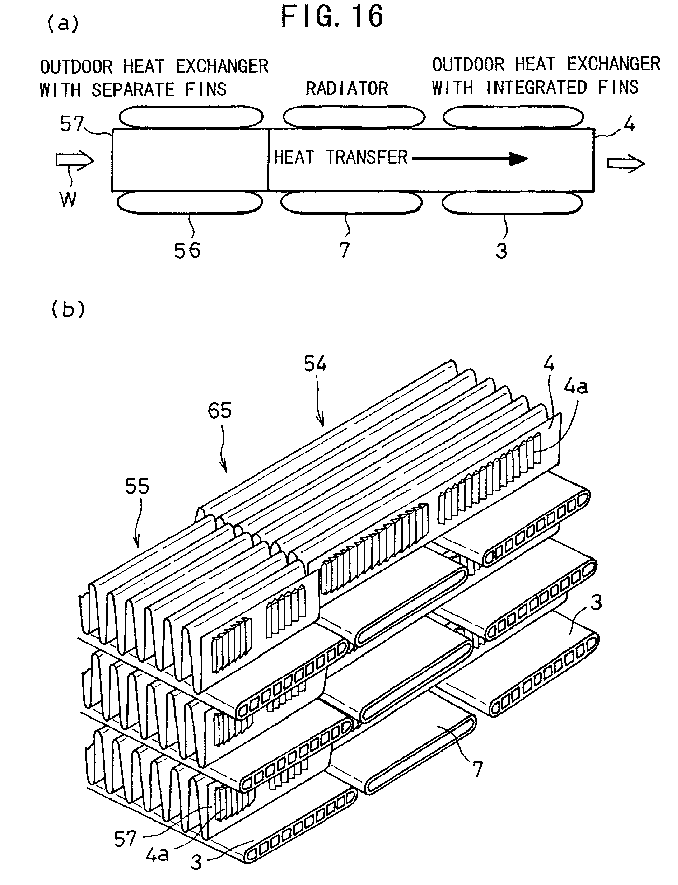

In the eighth embodiment shown in FIG. 15 and FIGS. 16(a) and 16(b), the integrated fins 4 of the integrated heat exchanging unit 54 and the separate fins 57 of the heat exchanging unit 55 at the outdoor heat exchanger 60 with separate fins are provided in contact with each other and with their phases offset from each other, as shown in FIG. 16(b). It is to be noted that the structural features other than those described above are identical to the structural features adopted in the fifth embodiment, and that the phases of the integrated fins 4 and the separate fins 57 may be the same.

In the structure described above, too, advantages similar to those achieved in the seventh embodiment are realized. In addition, the integrated heat exchanging unit 54 and the heat exchanging unit 55 of the outdoor heat exchanger 60 with separate fins can be formed as an integrated structure with ease by using the side plates 20 provided on the two outer sides along the direction in which the plurality of tubes 3, 7 and 56 and the fins 4 and 7 are laminated.

### INDUSTRIAL APPLICABILITY

As explained above, according to the present invention, frost formation can be effectively prevented or frost that has been formed can be effectively removed during a heating operation of the outdoor heat exchanger in a heat-pump type air-conditioning system by efficiently utilizing the exhaust heat from the engine cooling liquid, and an improvement in the heating performance is achieved in the air-conditioning system. Thus, a reduction in the fuel consumption is achieved by lowering the quantity of energy consumption. In addition, a reduction in the quantity of exhaust gas and a reduction in the length of time elapsing before a heating operation can start are realized.

Furthermore, by adopting the seventh or eighth embodiment, frost formation can be effectively prevented or frost that has been formed can be effectively removed during a heating operation of the outdoor heat exchanger in the heat-pump type air-conditioning system and, at the same time, an improvement in the heating performance of the air-conditioning system is realized while minimizing the degree to which the cooling performance is compromised.

## Claims

1. An air-conditioning system for vehicles having a heat-pump type freezing cycle constituted of a compressor, an indoor heat exchanger, an expansion device, an outdoor heat exchanger and α cooling liquid circulating cycle that circulates a cooling liquid for cooling an engine and distributes the cooling liquid to a radiator when the cooling liquid reaches a level equal to or higher than a specific temperature;
with said outdoor heat exchanger and said radiator each provided with a heat exchanging unit constituted of fins and a plurality of tubes that are alternately laminated with said fins and a header communicating with said plurality of tubes, the heat exchanging units of said outdoor heat exchanger and said radiator facing opposite each other and said fins formed as a common integrated member; characterized in that:
a means for decision-making that makes a decision as to whether or not said outdoor heat exchanger is in an environment in which frost formation may occur; and
a means for control that distributes the cooling liquid to said radiator if said means for decision-making decides that said outdoor heat exchanger is in an environment in which frost formation may occur.

2. An air-conditioning system for vehicles according to claim 1, characterized in that:
the cooling liquid circulating cycle is provided with an open / close valve which opens a distribution path to said radiator when the cooling liquid achieves a temperature equal to or higher than a specific temperature; and
said means for control opens said open 1 close valve if said means for decision-making decides that said outdoor heat exchanger is in an environment in which frost formation may occur even when the temperature of the cooling liquid is lower than said specific temperature.

3. An air-conditioning system for vehicles according to claim 1, characterized in that:
the cooling liquid circulating cycle is provided with an open / close valve that opens a distribution path to said radiator when the temperature of the cooling liquid reaches a level equal to or higher than a specific temperature; and
said means for control to distribute the cooling liquid to said radiator by bypassing said open / close valve when it is decided by said means for decision-making that said outdoor heat exchanger is in an environment in which frost formation may occur.

4. An air-conditioning system for vehicles according to claim 3, characterized in that:
the cooling liquid circulating cycle is provided with an open / close valve that opens a distribution path to said radiator when the cooling liquid reaches a temperature equal to or higher than a specific temperature and another open / close valve positioned parallel to said open / close valve; and
said means for control opens said other open / close valve if it is decided by said means for decision-making that said outdoor heat exchanger is in an environment in which frost formation may occur.

5. An air-conditioning system for vehicles according to claim 1, characterized in that:
said means for decision-making is provided with a heat exchanger temperature sensor that detects the surface temperature of said outdoor heat exchanger and makes a decision as to whether or not said outdoor heat exchanger is in an environment in which frost formation may occur in conformance to whether or not the surface temperature of said outdoor heat exchanger is equal to or lower than a specific temperature.

6. An air-conditioning system for vehicles according to claim 1, characterized in that:
said means for decision-making is provided with an external air temperature sensor that detects the temperature of the external air and makes a decision as to whether or not said outdoor heat exchanger is in an environment in which frost formation may occur in conformance to whether or not the external air temperature is equal to or lower than a specific temperature.

7. An air-conditioning system for vehicles according to claim 1, characterized in that:
said means for decision-making is provided with a heat exchanger pressure sensor that detects the coolant pressure at an intake or an outlet of said outdoor heat exchanger and makes a decision as to whether not said outdoor heat exchanger is in an environment in which frost formation may occur in conformance to whether or not the coolant pressure at the intake or the outlet of said outdoor heat exchanger is equal to or lower than a specific pressure.

8. An air-conditioning system for vehicles according to claim 1, characterized in that:
said heat-pump type freezing cycle is provided with another outdoor heat exchanger having fins constituted as a separate member from said fins of said outdoor heat exchanger and positioned parallel to said outdoor heat exchanger and a means for flow path switching that selects a coolant flow path to said outdoor heat exchanger or to a coolant flow path to said other outdoor heat exchanger; and
said outdoor heat exchanger located is further down wind relative to said radiator.

9. An air-conditioning system for vehicles according to claim 8, characterized in that;
said means for flow path switching selects the coolant path to said outdoor heat exchanger during a heating operation and selects the coolant path to said other outdoor heat exchanger during a cooling operation to distribute the coolant.

10. An air-conditioning system for vehicles according to claim 8, characterized in that;
said fins of said outdoor heat exchanger and said fins of said other outdoor heat exchanger are distanced from each other.

11. An air-conditioning system for vehicles according to claim 8, characterized in that;
said fins of said outdoor heat exchanger and said fins of said other outdoor heat exchanger are in contact with each other.
